# FASCICULE DE BREVET EUROPEEN

(11) **EP 3 010 211 B1**
(45) Date de publication et mention de la délivrance du brevet: **27.11.2019**
(21) Numéro de dépôt: 15190288.9
(22) Date de dépôt: 16.10.2015
(51) Int. Cl.: H04M 1/04, G06F 1/16, G06Q 20/32, H04M 1/725, G06F 13/40, G07F 7/08, H01R 24/60, H01R 107/00, G06F 13/42

(54) **DISPOSITIF D'INSERTION DE TERMINAL**
VORRICHTUNG ZUM EINSCHIEBEN EINES ENDGERÄTS
TERMINAL INSERTION DEVICE

(30) Priorité: 17.10.2014 FR 1459998
(43) Date de publication de la demande: 20.04.2016
(73) Titulaire: Ingenico Group, 75015 Paris (FR)
(72) Inventeur: FROMENT, Marion, 26270 Loriol (FR); FLEURY, Fabrice, 07130 Toulaud (FR); BARNERON, Sylvain, 26500 Bourg les Valence (FR)
(74) Mandataire: Vidon Brevets & Stratégie

(56) Documents cités:
- EP-B1- 2 095 520
- DE-A1-102007 037 944
- FR-A1- 2 968 433
- US-A1- 2007 263 348
- US-A1- 2013 050 934
- US-A1- 2013 058 036
- US-A1- 2014 191 707

## Description

### 1. Domaine de l'invention

L'invention se rapporte au domaine des terminaux de paiement. L'invention se rapporte plus particulièrement au domaine des terminaux de paiement comprenant un logement de réception d'un terminal de communication. L'invention se rapporte plus précisément à un dispositif d'insertion et de retrait d'un tel terminal de communication au sein du logement prévu à cet effet dans le terminal de paiement.

### 2. Art antérieur

Des récentes évolutions des terminaux de paiement sont liées à l'apparition des téléphones intelligents, également appelés smartphone. Ces téléphones présentent l'intérêt de disposer d'une puissance de calcul importante. Les smartphones ont donc été plébiscités par certains professionnels du commerce pour devenir des assistants aux opérations de commerces et notamment aux opérations de vente. Il est dès lors assez vite apparu qu'il était intéressant de coupler ce smartphone avec un terminal de paiement afin de poursuivre les opérations commerciales (comme par exemple les opérations de vente) par une opération de paiement. Ce couplage du terminal de paiement et du terminal de communication est réalisé à deux niveaux : d'une part un couplage physique, dans lequel le terminal de paiement et le smartphone sont positionnés dos à dos au sein d'une enveloppe et un couplage de communication afin que le terminal de paiement et le smartphone puisse échanger des données relatives aux paiements par exemple. Un tel dispositif peut par exemple être le terminal « PAYware Mobile e315 » de la société « Verifone ».

On connaît ainsi de la demande FR2968433 un tel dispositif de paiement électronique. Il est représenté en relation avec les figures la et 1b. Un tel dispositif comprend un lecteur de carte à puce et il comprend un logement apte à recevoir et maintenir un téléphone portable et comprenant des moyens de connexion avec ce téléphone portable, et des moyens de traitement de données aptes à recevoir des informations relatives à un paiement et à échanger des données avec un serveur distant, via une communication téléphonique mise en œuvre par ledit téléphone portable. Ainsi, selon ce document de l'art antérieur, on dispose d'un dispositif de paiement autonome et nomade, pouvant être utilisé en tout lieu (dans un taxi, chez un particulier,...), dès lors qu'une communication téléphonique via le réseau cellulaire est possible. Il n'est cependant pas nécessaire que le dispositif de paiement dispose de ses propres moyens de communication, et en particulier de sa propre carte SIM et d'un abonnement correspondant, puisqu'il est prévu pour exploiter un téléphone portable classique, que l'utilisateur peut par ailleurs utiliser pour des communications vocales ou toute autre application.

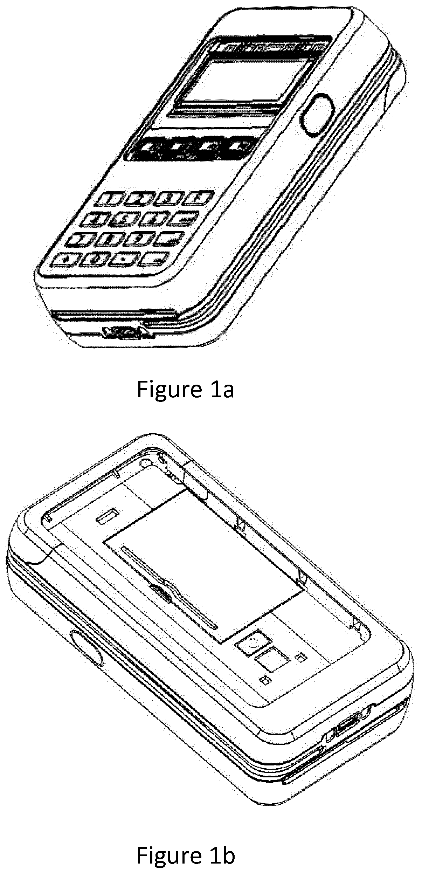

Comme cela peut être constaté sur la figure 1b, un tel dispositif comprend un logement d'insertion du terminal de communication. Ce logement d'insertion comprend une trappe, qui permet d'insérer et de retirer le terminal de communication par translation. La partie inférieure du terminal de communication (celle qui comprend un connecteur femelle, par exemple un connecteur micro USB ou tout autre connecteur de ce type) est insérée dans le logement puis en poussant la partie supérieure du terminal de communication, celui-ci est complètement inséré dans le logement prévu à cet effet. La trappe est ensuite fermée. Lorsqu'elle est enfoncée au fond du logement, le connecteur femelle du terminal de communication est enfiché dans un connecteur maie correspondant.

Pour retirer le terminal de communication, la trappe est ouverte puis, en appuyant sur l'écran du terminal de communication avec ses doigts, l'utilisateur extrait celui-ci du logement (avec un mouvement translatif). L'extraction est donc réalisée en effectuant un mouvement de translation avec les doigts tout en appuyant sur l'écran du terminal de communication.

Ces méthodes d'insertion et de retrait présentent des problèmes. Le premier se rapporte au retrait du terminal de communication. On comprend en effet qu'il n'est pas aisé de retirer le terminal de communication en appuyant, plus ou moins fortement, sur l'écran de ce terminal. Le risque de casse est important. Ce risque de casse est lié à la difficulté d'extraction du connecteur femelle du terminal de communication du connecteur mâle. Pour pallier ce problème de difficulté d'insertion, le terminal « PAYware Mobile e315 » de la société « Verifone » dispose d'une semi ouverture, au niveau de la partie inférieure du logement, permettant d'insérer un doigt pour pousser le terminal de communication en dehors du logement. Cette solution est assez disgracieuse, car elle interrompt le pourtour général du logement (cette solution ne convient pas au design souvent soigné des terminaux de communication). De plus cette solution permet d'exercer une pression sur le terminal de communication alors même que celui-ci est en fonctionnement ce qui peut provoquer des problèmes tant au niveau du terminal de paiement qu'au niveau du terminal de communication. Par ailleurs, elle ne règle pas le problème de l'insertion du terminal de communication. Comme explicité préalablement, cette insertion doit également conduire à l'insertion du connecteur femelle du terminal de communication dans le connecteur male du boitier. Or, cette insertion est réalisée en aveugle. En effet le connecteur mâle est situé au fond du logement. Il n'est donc pas visible par l'utilisateur lors de l'insertion du terminal de paiement. L'utilisateur n'est donc pas en mesure d'une part de s'assurer que le connecteur femelle du terminal de communication est correctement enfiché dans le connecteur mâle du boitier et d'autre part il ne peut pas s'assurer que le connecteur mâle du boitier ne présente pas de détérioration (casse, torsion anormale, etc.)

Il est également fait référence aux documents d'art antérieur US 2013/050934 A1, US 2014/191707 A1, EP 2 095 520 B1 et DE 10 2007 037944 A1.

### 3. Résumé de l'invention

La solution proposée est exempte au moins de certains de ces inconvénients de l'art antérieur. Plus particulièrement, la solution proposée permet une insertion et un retrait sécurisé du terminal de communication. La solution porte principalement sur un connecteur coulissant. Par extension la solution porte sur un dispositif de paiement, comprenant un logement d'insertion d'un terminal de communication, ledit logement d'insertion comprenant un connecteur coulissant.

Plus particulièrement, il est divulgué un dispositif de connexion d'un terminal de communication, dispositif comprenant: une surface plate, un connecteur mâle destiné à se connecter à un connecteur femelle dudit terminal de communication, une base mobile, sur laquelle ledit connecteur mâle est fixé, ladite base mobile étant placée sur la surface plate et une rainure ménagée dans la base mobile et une languette correspondante sur la surface plate, qui s'étend longitudinalement le long d'un axe de coulissement, dans lequel ladite base mobile pouvant coulisser sur la surface plate le long de l'axe de coulissement, correspondant à une direction d'insertion et de retrait dudit terminal de communication au sein dudit dispositif.

Ainsi, le dispositif de connexion peut se déplacer selon un axe de coulissement donné, et faciliter la connexion et la déconnexion du terminal de communication. Il n'est ainsi plus nécessaire, avec un tel dispositif de connexion, d'appuyer fortement sur l'écran du terminal de communication pour extraire celui-ci.

Selon une caractéristique particulière, ladite base comprend en outre au moins un moyen de rappel.

Ainsi, ce moyen de rappel peut faciliter les opérations de connexion et de déconnexion du terminal de communication en accompagnant le mouvement translatif et en maintenant les deux positions pour le dispositif de connexion : la position d'attente et la position de fonctionnement.

Selon un mode de réalisation particulier, ledit connecteur mâle est un connecteur micro USB.

Selon un mode de réalisation particulier, ledit connecteur mâle est un connecteur Lightning.

Selon un mode de réalisation particulier, ledit connecteur mâle est un connecteur USB de type-C.

Selon un mode de réalisation particulier, ladite base comprend au moins deux ailerons de rétention, aptes à maintenir ladite base dans une position de coulissement.

Selon une caractéristique particulière, lorsque ledit dispositif de connexion est placé dans ledit dispositif de paiement, le dispositif de connexion est recouvert par une plaque de maintien.

Selon un autre aspect, l'invention se rapporte à un dispositif de paiement comprenant un terminal de paiement et un logement d'insertion d'un terminal de communication au sein du terminal de paiement.

Un tel dispositif comprend, au sein dudit logement d'insertion, ledit dispositif de connexion.

Selon une caractéristique complémentaire, lesdits moyens de coulissement dudit dispositif de connexion se rapportent à des moyens de coulissements complémentaires aménagés au sein d'un emplacement spécifique dudit logement d'insertion. Selon une caractéristique particulière, lesdits moyens de coulissement du dispositif de connexion prennent la forme d'une ou plusieurs rainures et lesdits moyens de coulissement complémentaires du logement d'insertion prennent la forme d'une ou plusieurs languettes. L'inverse peut également être mis en œuvre selon un mode de réalisation complémentaire.

### 4. Dessins

Ces caractéristiques, ainsi que d'autres, apparaîtront plus clairement à la lecture de la description suivante d'un mode de réalisation, donné à titre de simple exemple illustratif et non limitatif, et des figures annexées, parmi lesquelles :
- la figure la, déjà commentée, est une vue en perspective du dispositif de paiement électronique de l'art antérieur ;
- la figure 1b, déjà commentée, est autre une vue en perspective du dispositif de paiement électronique de l'art antérieur ;
- la figure 2a est une vue de coupe explicitant le principe de la technique proposée ;
- la figure 2b est une vue de dessus explicitant le principe de la technique proposée ;
- la figure 3a est une illustration, sous forme isométrique du connecteur coulissant dans une position d'attente ;
- la figure 3b est une illustration, sous forme isométrique du logement d'insertion dans lequel un terminal est inséré avec le connecteur coulissant dans une position d'attente ;
- la figure 4 présente une vue isométrique du logement d'insertion avec le connecteur coulissant en position d'attente ;
- la figure 5 est une vue de coupe partielle du dispositif de paiement ;
- la figure 6 est une vue de coupe partielle du dispositif de paiement, avec le connecteur également en coupe.

### 5. Description

### 5.1. Principe général

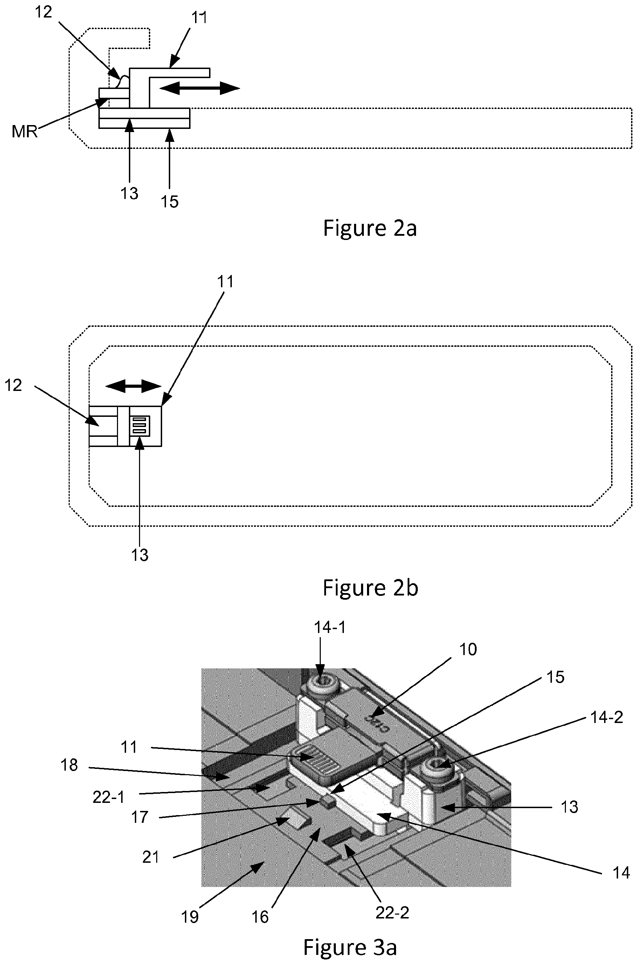

Comme indiqué précédemment, le problème d'insertion et de retrait du terminal de communication est résolu par l'adjonction, au sein du boitier, d'un connecteur mâle mobile en translation. Le principe général de l'invention est décrit en relation avec les figures 2a et 2b.

La figure 2a est une vue de coupe de principe de la mise en œuvre du connecteur male mobile en translation. La figure 2b représente une vue de dessus. Le connecteur (11) est monté sur un support (13). Le support (13) est mobile dans une direction donnée. Pour ce faire le principe général est de munir le support d'une rainure (15) complémentaire d'une languette (non représentée). Lorsqu'il est posé sur la languette, le support ne peut donc que coulisser dans une seule direction, qui est la direction d'insertion et de retrait du terminal de paiement. La rainure n'est pas obligatoire. Tout autre moyen de coulissement, tel qu'un coulisseau, peut également être utilisé, en lien par exemple avec un rail d'accueil. Lorsqu'il s'agit d'une rainure, la section de celle-ci n'est pas nécessairement parallélépipédique. Cette section peut être semi-circulaire ou encore triangulaire.

Le connecteur (11) pour sa part est relié à une carte mère ou à une carte d'alimentation du dispositif de paiement par l'intermédiaire d'un flex (12). Ce flex (12) permet d'assurer un déplacement du support et une connectivité permanente du connecteur.

Le support de connecteur, de manière complémentaire est associé à des moyens de rappel (MR)(par exemple un ressort ou une lame ressort), permettant de mettre le support en butée contre une géométrie de butée (une dent de butée) lorsqu'aucun terminal n'est inséré dans le logement de réception. De manière plus précise, lorsqu'aucun terminal n'est dans le logement, le support est poussé en butée afin et est maintenu dans une première position, dite position d'attente. Lorsqu'un terminal est inséré, le terminal exerce une pression sur le support par l'intermédiaire du connecteur male. Le support coulisse donc lors de l'insertion jusqu'à une deuxième position, dite position de fonctionnement. L'action du moyen de rappel est annihilée par la fermeture de la trappe permettant d'insertion du terminal. Bien entendu, ceci est un exemple de mise en œuvre. Il est tout à fait possible de ne pas utiliser de moyens de rappels sans que cela nuise aux avantages procurés par la présente technique.

L'adjonction du connecteur mâle mobile présente deux avantages : le premier avantage est lié au fait que le connecteur mâle du boitier est visible lorsqu'aucun terminal de communication n'est inséré. Il est ainsi aisé de vérifier l'état de ce connecteur mâle et de détecter ainsi d'une part une détérioration de celui-ci et d'autre part une éventuelle tentative de fraude. Il existe en effet des dispositifs de fraudes tels que des sur connecteurs qui sont posés ou enfichés sur le connecteur mâle existant et qui permettent d'intercepter et/ou de modifier des données transitant sur celui-ci par l'intermédiaire de ce connecteur.

Le deuxième avantage est lié à l'insertion et au retrait du terminal de communication. En effet le connecteur mâle mobile en translation permet, lors de l'insertion du terminal de communication, d'une part de visualiser l'étape d'insertion et de constater (ou non) que le connecteur mâle s'insère correctement dans le connecteur femelle. Ainsi, on prévient les détériorations tant du connecteur mâle que du connecteur femelle (il se peut en effet que ce soit le connecteur femelle du terminal de communication qui soit détérioré, et cette détérioration peut ne pas être perçue immédiatement par l'utilisateur). En outre, le connecteur mâle mobile en translation permet également une insertion progressive du connecteur mâle dans le connecteur femelle. La mobilité en translation permet d'insérer le terminal de communication dans le même mouvement que le mouvement de recul du connecteur mâle mobile en translation au fur et à mesure de l'insertion. Par ailleurs cet effet progressif peut en outre être augmenté, selon un mode de réalisation, par l'adjonction, entre le connecteur mobile et le fond du boitier, d'une moyen de rappel (de type ressort, lame à ressort) qui permet d'assurer une certaine force de résistance à l'insertion.

En outre, le connecteur mâle mobile en translation permet, lors de l'extraction du terminal de communication, de faciliter le mouvement de translation du terminal de communication. En effet, la séparation du connecteur femelle du terminal de communication et du connecteur mâle du boitier peut présenter une certaine difficulté (comme on l'a expliqué précédemment). La mobilité du connecteur est une réponse simple et efficace à cette problématique : cette mobilité permet d'effectuer un mouvement de translation simple ; le terminal de communication et le connecteur mobile glisse de concert, en étant emboité l'un dans l'autre jusqu'à un point de butée du connecteur mobile ; cette translation permet de créer un vide, au sein du boitier, autour de la base du terminal de communication. Ce vide peut être avantageusement exploité pour insérer un doigt ou un objet qui est alors utilisé pour pousser le terminal de communication en dehors du boitier. On a donc une extraction en deux temps : un premier temps durant lequel le connecteur accompagne le terminal de communication lors de la translation (lors du glissement) et un deuxième temps au cours duquel l'utilisateur extrait le terminal de communication en poussant la base de celui-ci, de chaque côté du connecteur, en utilisant pour ce faire l'espace laissé libre à l'issue de la glissement. Par ailleurs, en fonction de la longueur de la butée par rapport un fond du boitier, le terminal peut également être extrait en tirant sur le haut du terminal (en exerçant une pression à l'aide de deux doigts sur la tranche du terminal) et en tirant celui-ci.

Par ailleurs cet effet de glissement préalable peut en outre être augmenté, selon un mode de réalisation, par l'adjonction, entre le connecteur mobile et le fond du boitier, d'une moyen de rappel (de type ressort, lame à ressort) qui permet d'assurer une certaine force de poussé à l'extraction du terminal de communication. Cette force peut ainsi être exercée dès l'ouverture de la trappe d'insertion/extraction du terminal de communication : lorsque la trappe est ouverte, le moyen de rappel peut alors exercer sa force de poussée sans obstacle, pour que le connecteur mâle reprenne une position de départ. Bien entendu, la force de rappel exercée est adaptée selon que l'on souhaite que le connecteur mobile en translation puisse extraire seul le terminal de communication ou bien qu'il ne constitue qu'une aide à l'aide à la poussée du terminal hors du logement.

### 5.2. Description d'un mode de réalisation.

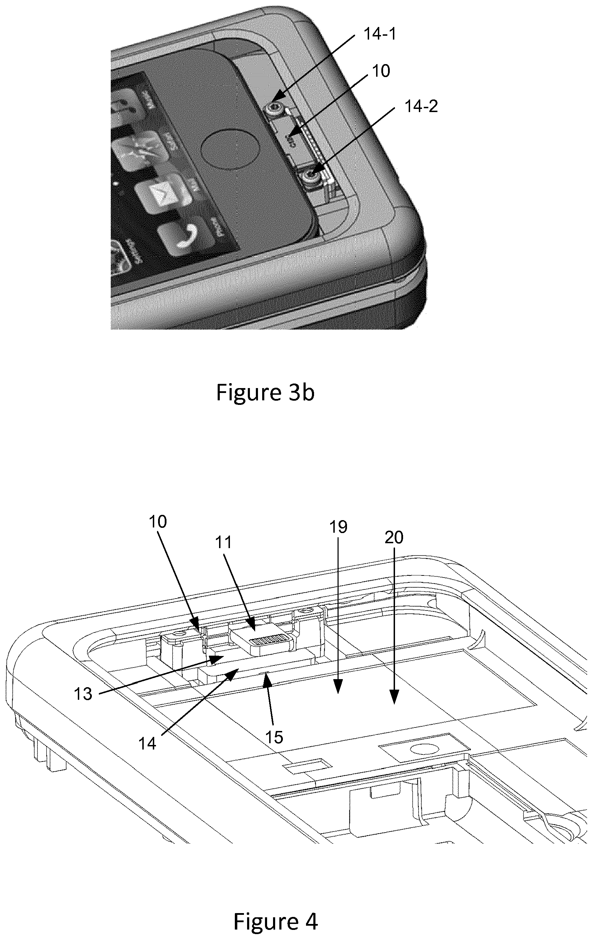

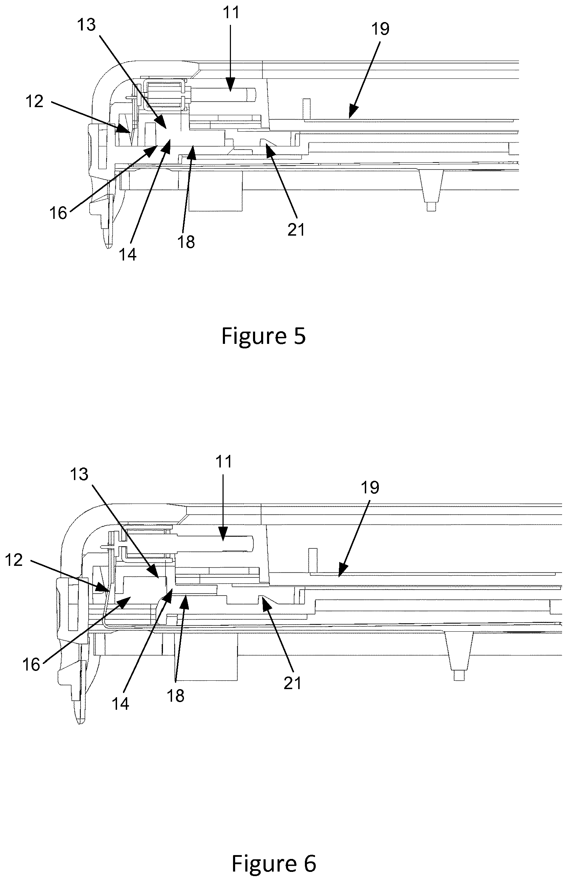

On décrit, en relation avec les figures 3a, 3b, 4, 5 et 6 un mode de réalisation de l'implantation du connecteur mâle mobile. Dans ce mode de réalisation, il s'agit de permettre l'insertion et le retrait de terminaux de communication de la marque Apple™ comprenant un connecteur de type Lightning™. Le mâle connecteur Lightning™ Apple™ peut coulisser afin de faciliter l'insertion et l'extraction du périphérique hors de son logement (élan et/ou création d'une zone de préhension).

Ce connecteur coulissant (10) comprend un connecteur mâle (11) connecté à une carte mère (non représentée) par l'intermédiaire d'un circuit imprimé flexible (12). Ce connecteur mâle (11) est métallique et est fixé sur une base (13) mobile en translation, en matière plastique. Le connecteur (11) est, dans ce mode de réalisation, fixé à la base (13) mobile par l'intermédiaire par exemple de deux vis trox (14-1, 14-2) située de part et d'autre de la base (13) et de part et d'autre du connecteur (11). Le type de fixation ou de vis utilisé n'a pas nécessairement une grande importance. Cependant, compte tenu des efforts de poussée et de traction exercés, l'utilisation de vis trox peut présenter un avantage pour leur adaptation aux matières plastiques. La base (13), mobile en translation, comprend un socle (14). Pour plus de clarté, il est base et socle sont confondus. Ce socle comprend, en son centre, une rainure (15) qui s'étend longitudinalement, dans l'axe de coulissement du connecteur (10). Cette rainure (15) permet de conformer l'axe de coulissement du connecteur mobile (10). En effet, la base est posée sur une surface plate (16), comprenant une languette (17) conformée pour s'insérer dans la rainure (15) du socle (14) et assurer une bonne stabilité et un mouvement uniquement dans le sens longitudinal. Bien entendu ceci est un mode de réalisation illustratif. D'autres formes, types et nombre de languettes et de rainures peuvent être utilisés. Le socle comprend également deux ailerons de rétention, s'étendant de part et d'autre du socle perpendiculairement à la rainure. Ces deux ailerons sont utilisés pour maintenir le connecteur mobile en place et éviter qu'il ne sorte de son logement de manière inopinée.

La surface plate (16) du logement de réception se situe dans un plan (18) légèrement abaissé par rapport au plan général (19) d'accueil du terminal de communication au sein du logement. Ceci permet de protéger le plan de translation du connecteur mobile avec une plaque d'occultation (20) qui, par voie de conséquence se situe dans le plan général (19) d'accueil du terminal de communication.

La surface plate du logement de réception comprend également une dent de butée (21), servant à stopper le mouvement translatif du connecteur mobile (10). Par ailleurs, en bout de course, au niveau de la dent de butée, deux orifices latéraux (22-1, 22-2) sont également aménagés afin de permettre l'extraction du connecteur mobile en cas de besoin (comme une maintenance par exemple, lorsque le connecteur est abimé). Ces deux orifices permettent d'extraire le connecteur à un endroit souhaité, là ou un emplacement est aménagé pour les ailerons de rétention.

## Revendications

1. Dispositif de connexion (10) d'un terminal de communication, dispositif comprenant :
- une surface plate (16) ;
- un connecteur mâle (11) destiné à se connecter à un connecteur femelle dudit terminal de communication ;
- une base (13) mobile, sur laquelle ledit connecteur mâle (11) est fixé, ladite base mobile étant placée sur la surface plate (16) et
- une rainure ménagée dans la base (13) mobile et une languette correspondante sur la surface plate (16), qui s'étend longitudinalement le long d'un axe de coulissement, dans lequel ladite base mobile pouvant coulisser sur la surface plate le long de l'axe de coulissement, correspondant à une direction d'insertion et de retrait dudit terminal de communication au sein dudit dispositif.

2. Dispositif selon la revendication 1, **caractérisé en ce que** ladite base comprend en outre au moins un moyen de rappel.

3. Dispositif selon la revendication 1, **caractérisé en ce que** ledit connecteur mâle est un connecteur micro USB.

4. Dispositif selon la revendication 1, **caractérisé en ce que** ledit connecteur mâle est un connecteur Lightning.

5. Dispositif selon la revendication 1, **caractérisé en ce que** ledit connecteur mâle est un connecteur USB de type-C.

6. Dispositif de paiement comprenant :
- un terminal de paiement ;
- un logement d'insertion d'un terminal de communication au sein du terminal de paiement ;
- **caractérisé en ce qu'**il comprend, au sein dudit logement d'insertion, un dispositif de connexion selon l'une quelconque des revendications précédentes.

## Patentansprüche

1. Vorrichtung zum Anschließen (10) eines Kommunikationsendgeräts, wobei die Vorrichtung aufweist:
- eine ebene Fläche (16),
- einen Stecker (11), der dazu bestimmt ist, an eine Buchse des Kommunikationsendgeräts angeschlossen zu werden,
- eine bewegliche Basis (13), auf der der Stecker (11) befestigt ist, wobei die bewegliche Basis auf der ebenen Fläche (16) angeordnet ist, und
- eine Nut, die in der beweglichen Basis (13) ausgebildet ist, und eine entsprechende Lasche auf der ebenen Fläche (16), die sich in Längsrichtung entlang einer Gleitachse erstreckt, wobei die bewegliche Basis auf der ebenen Fläche entlang der Gleitachse gleiten kann, die einer Einschiebe- und Entnahmerichtung des Kommunikationsendgeräts in die Vorrichtung und aus dieser heraus entspricht.

2. Vorrichtung nach Anspruch 1, **dadurch gekennzeichnet, dass** die Basis ferner mindestens ein Rückstellmittel aufweist.

3. Vorrichtung nach Anspruch 1, **dadurch gekennzeichnet, dass** der Stecker ein Micro-USB-Stecker ist.

4. Vorrichtung nach Anspruch 1, **dadurch gekennzeichnet, dass** der Stecker ein Lightning-Stecker ist.

5. Vorrichtung nach Anspruch 1, **dadurch gekennzeichnet, dass** der Stecker ein USB-Typ-C-Stecker ist.

6. Zahlungsvorrichtung, umfassend:
- ein Zahlungsendgerät,
- eine Aufnahme zum Einfügen eines Kommunikationsendgeräts in das Zahlungsendgerät,
**dadurch gekennzeichnet, dass** sie in der Aufnahme zum Einfügen eine Vorrichtung zum Anschließen nach einem der vorhergehenden Ansprüche aufweist.

## Claims

1. Device (10) for connecting a communications terminal, the device comprising :
- a flat surface (16);
- a male connector (11) which is to be connected to a female connector of said communications terminal,
- a mobile base (13), on which said male connector (11) is fixed, said mobile base (13) being placed on said flat surface (16),
- a groove (15) made in said base (13) and a corresponding tongue on said flat surface (16), which extends longitudinally in a sliding axis, in which said mobile base can slide on said flat surface in a sliding axis corresponding to a direction of docking and removal of said communications terminal within said device.

2. Device according to claim 1, **characterized in** the base also comprises at least one return means.

3. Device according to claim 1, **characterized in** said male connector is a micro-USB connector.

4. Device according to claim 1, **characterized in** said male connector is a Lightning connector

5. Device according to claim 1, **characterized in** said male connector is a C-type USB connector.

6. Payment device comprising :
- a payment terminal;
- and a housing for docking a communications terminal inside said payment terminal,
- **characterized in that** it comprises, within said housing for docking, a connection device according to any one of the above claims.
